# EUROPEAN PATENT SPECIFICATION

(11) **EP 3 362 658 B1**
(45) Date of publication and mention of the grant of the patent: **18.12.2019**
(21) Application number: 15790604.1
(22) Date of filing: 13.10.2015
(51) Int. Cl.: F02B 19/10, F02B 19/12, F02B 19/18, F02P 13/00

(54) **PRECHAMBER ARRANGEMENT**
VORKAMMERANORDNUNG
AGENCEMENT DE PRÉCHAMBRE

(43) Date of publication of application: 22.08.2018
(73) Proprietor: Wärtsilä Finland Oy, 65100 Vaasa (FI)
(72) Inventor: HÄGGBLOM, Daniel, FI-65100 Vaasa (FI); HYVÖNEN, Jari, FI-65100 Vaasa (FI)
(74) Representative: Berggren Oy, Helsinki & Oulu
(86) International application number: PCT/FI2015/050691
(87) International publication number: WO 2017/064355

(56) References cited:
- EP-A1- 2 998 537
- DE-A1- 3 120 007
- JP-A- H07 133 722
- US-A1- 2011 100 322
- US-A1- 2014 083 391

## Description

### Technical field of the invention

The present invention relates to a prechamber arrangement for a piston engine in accordance with the preamble of claim 1.

### Background of the invention

Internal combustion engines can be provided with prechambers, also called as precombustion chambers. In prechamber engines, each cylinder is provided with a prechamber, and part or all of the fuel is introduced into the prechamber. Depending on the engine, the fuel can be self-ignited, or a spark plug or some other device can be used for igniting the fuel. The combustion thus starts in the prechamber, but main part of the combustion takes place in the cylinder outside the prechamber.

For example, US 2014/0083391 A1, US 2001/0100322 A1 and JP H07 133722 A disclose prechamber arrangements with at least one prechamber comprising a fuel inlet and a spark plug for igniting the fuel. The prechamber construction is beneficial especially in lean burn engines. When the engine is operated on the lean burn principle, the mixture of air and fuel that is introduced into the cylinder contains more air than is needed for complete combustion of the fuel. The excess air lowers peak temperatures in the cylinder and the NOx emissions are therefore reduced. In lean burn engines that are provided with a prechamber, part of the fuel is introduced into the prechamber and part of the fuel is mixed with the air before the intake valves. This kind of arrangement can be used, for instance, in spark ignited gas engines. The gas-air mixture in the prechamber is rich compared to the mixture in the cylinder. The rich mixture in the prechamber is ignited by a spark plug and the flames from the prechamber ignite the mixture in the cylinder.

The gas exchange and mixing in the prechamber is a complex phenomenon. After an exhaust stroke, residual gases remain in the prechamber. During the intake stroke, at least a major part of the residual gas should be expelled by the fuel and air that is introduced into the prechamber. During a compression stroke, the mixture in the prechamber should be mixed with the lean air/fuel mixture that flows into the prechamber from the main combustion chamber.

### Summary of the invention

An object of the present invention is to provide an improved prechamber arrangement for a piston engine. The characterizing features of the prechamber arrangement according to the invention are given in the characterizing part of claim 1.

The prechamber arrangement according to the invention comprises a prechamber, which comprises an opening for receiving a spark plug and at least one fuel inlet for introducing fuel into the prechamber, and a nozzle chamber, which is in fluid communication with the prechamber and comprises at least one opening for receiving air/fuel mixture from a main combustion chamber of the engine and for supplying ignited fluid mixture from the prechamber into the main combustion chamber. The arrangement further comprises a mixing element that is arranged between the prechamber and the nozzle chamber. Because of the mixing element, the mixing between the mixture consisting of the fuel that has been injected into the prechamber and the residual gases remaining in the prechamber and the air/fuel mixture flowing into the prechamber from the main combustion chamber is improved. The mixing element also protects the spark plug against the hot combustion gases that flow into the prechamber during the combustion in the main combustion chamber.

According to an embodiment of the invention, the mixing element comprises two or more openings for establishing fluid communication between the prechamber and the nozzle chamber. According to an embodiment of the invention, the openings of the mixing element are arranged around a solid central region. The solid central region helps to protect the spark plug from the hot combustion gases. According to the invention, the mixing element is dome-shaped, the concave side facing the nozzle chamber.

According to an embodiment of the invention, the mixing element is configured to direct fluid that flows from the nozzle chamber into the prechamber away from the longitudinal central axis of the prechamber arrangement. This improves the protection of the spark plug.

According to an embodiment of the invention, the mixing element is a part that is separate from the prechamber and the nozzle chamber. The arrangement can comprise a first part forming at least a major part of the prechamber, a second part forming at least a major part of the nozzle chamber and a third part forming the mixing element. The first part can be an integral part of a cylinder head. By assembling the prechamber arrangement from separate parts, the most suitable material can be selected for each part.

According to an embodiment of the invention, the opening for the spark plug is arranged opposite to the mixing element. With this arrangement, the relative position of the spark plug is favorable for achieving an optimal protection by the mixing element.

According to an embodiment of the invention, the fuel inlet and the mixing element are configured such that direct flow from the fuel inlet through the mixing element is prevented. This helps to keep the major part of the fuel in the prechamber and to effectively expel the residual gases from the prechamber.

According to an embodiment of the invention, the prechamber has a curved wall and the fuel inlet is arranged to introduce the fuel into the prechamber in a tangential direction in relation to the wall of the prechamber. The fuel inlet is preferably arranged in a side wall of the prechamber. By this arrangement, a good swirling motion is created and the residual gases are effectively expelled from the prechamber.

The prechamber can have a spheroid shape and the nozzle chamber an elongated shape.

### Brief description of the drawings

Embodiments of the invention are described below in more detail with reference to the accompanying drawings, in which
Fig. 1 shows a simplified cross-sectional view of a cylinder head of a piston engine,

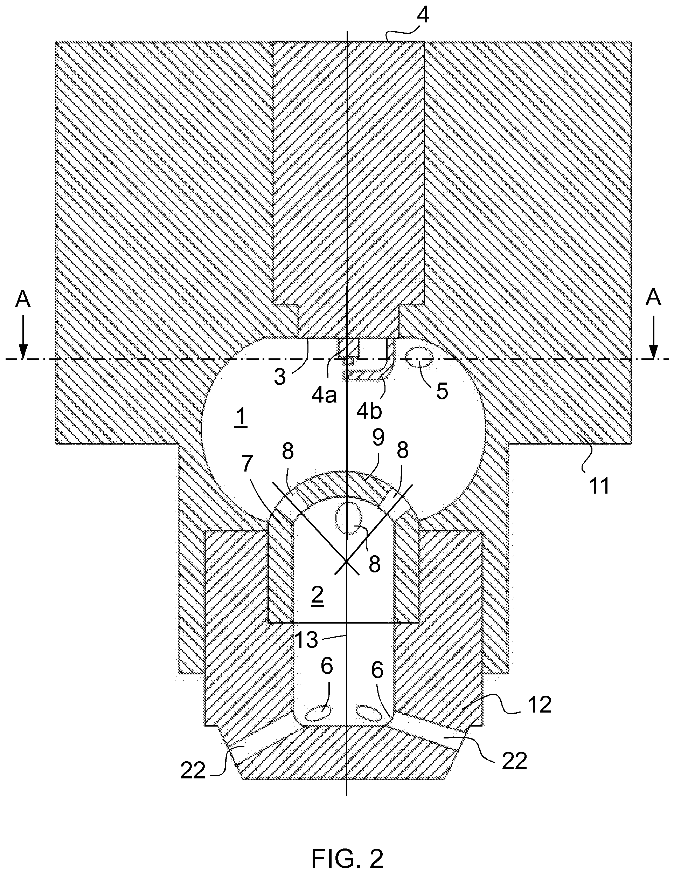

Fig. 2 shows a cross-sectional view of a prechamber arrangement according to an embodiment of the invention, and
Fig. 3 shows a cross-sectional view of the prechamber arrangement of figure 2 taken along line A-A.

### Description of embodiments of the invention

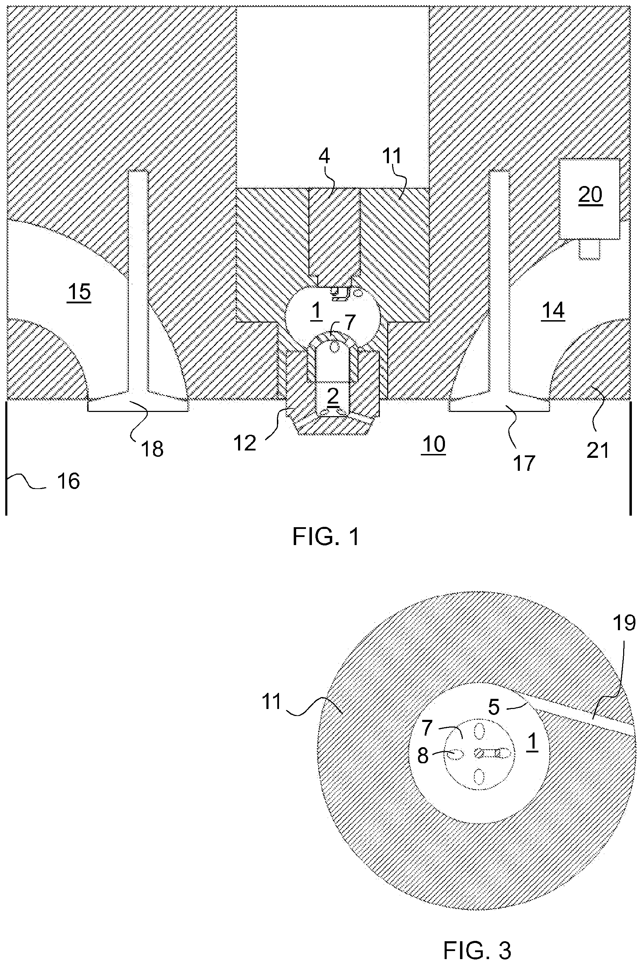

In figure 1 is shown a simplified cross-sectional view of a cylinder head 21 of a piston engine. The cylinder head 21 is arranged at the upper end of a cylinder of the engine and delimits together with a cylinder liner 16 and a piston (not shown) a main combustion chamber 10 of the cylinder. Each cylinder of the engine is provided with an own cylinder head 21. The engine is a large internal combustion engine, such as a main or an auxiliary engine of a ship or an engine that is used at a power plant for producing electricity. The engine is a gas engine that is operated using a gaseous fuel. The fuel can be, for instance, natural gas. The engine is a four-stroke engine. The engine is preferably operated according to a lean burn principle, meaning that the mixture of air and gaseous fuel that is introduced into the main combustion chamber 10 of the cylinder contains more air than is needed for complete combustion of the fuel. The excess air lowers peak temperatures in the cylinder and the NOx emissions are therefore reduced. The engine is spark-ignited. The intake air is introduced into the main combustion chamber 10 via an intake duct 14. An intake valve 17 controls the amount of the intake air that is introduced into the main combustion chamber 10. Each cylinder of the engine may be provided with more than one intake valve 17, for instance with two intake valves 17. The intake valves 17 can be operated e.g. mechanically, hydraulically or electrically or by using a combination of different elements. Exhaust gases are conducted out of the cylinder via an exhaust duct 15. The flow into the exhaust duct 15 is controlled by one or more exhaust valves 18, which are controlled in a similar way as the intake valves 17.

Each cylinder of the engine is provided with a prechamber arrangement. The prechamber arrangement comprises a prechamber 1, into which fuel can be introduced. A rich fuel/air mixture can be formed and ignited inside the prechamber 1, and the burning fluid flowing into the main combustion chamber 10 can be used for igniting the lean mixture inside the main combustion chamber 10. A major part of the prechamber arrangement is arranged inside the cylinder head 21 and one end, i.e. the lower end of the prechamber arrangement protrudes into the main combustion chamber 10. The expression "lower end" refers here to that end which is located closer to the main combustion chamber 10. Similarly, the expression "upper end" refers here to that end which is located farther from the main combustion chamber 10. The cylinders of the engine do not need to be in a vertical direction, but they can also be inclined, such as in a V-engine. The direction from the upper end towards the lower end of the prechamber arrangement is the longitudinal direction of the prechamber arrangement. The longitudinal central axis 13 of the prechamber arrangement is thus parallel to the cylinder liner 16. Part of the prechamber arrangement can be integrated with the cylinder head 21 and can form part of the cylinder head casting.

The upper end of the prechamber 1 is provided with an opening 3, which is configured to receive a spark plug 4. A spark plug 4 is arranged to protrude into the prechamber 1 through the opening 3. The spark plug 4 is parallel to the longitudinal axis of the prechamber arrangement and points thus towards the main combustion chamber 10 of the cylinder. Main part of the spark plug 4 is outside the prechamber 1, but the electrodes 4a, 4b of the spark plug 4 protrude into the prechamber 1. The prechamber 1 has curved side walls. Preferably, the prechamber 1 has a shape that is approximately a spheroid, i.e. an ellipsoid of revolution.

The prechamber 1 is provided with a fuel inlet 5, through which fuel can be introduced into the prechamber 1. The fuel is injected into the prechamber 1 in a direction that is perpendicular to the longitudinal axis 13 of the prechamber arrangement. Figure 3 shows how the fuel inlet 5 is connected to a fuel duct 19, through which the fuel is injected into the prechamber 1. The fuel duct 19 is arranged in such an angle in relation to the wall of the prechamber 1 that the fuel is injected into the prechamber 1 in a tangential direction. By this arrangement the mixing of the fuel and the residual gases in the prechamber 1 can be minimized and the residual gases are effectively expelled from the prechamber 1. In the embodiment of the figures, only one fuel inlet 5 is shown, but the prechamber 1 can comprise more than one fuel inlets. The fuel injection into the prechamber 1 is controlled by means of a prechamber fuel valve (not shown). In the embodiment of the figures, the fuel inlet 5 is arranged in the upper part of the prechamber 1 at the same level as the electrodes 4a, 4b of the spark plug 4.

The prechamber arrangement further comprises a nozzle chamber 2, which is in fluid communication with the prechamber 1. The nozzle chamber 2 protrudes into the main combustion chamber 10. The nozzle chamber 2 comprises openings 6, through which air/fuel mixture can flow from the main combustion chamber 10 into the prechamber 1, and the burning mixture can flow from the prechamber 1 into the main combustion chamber 10. The nozzle chamber 2 has an elongated shape in the longitudinal direction of the prechamber arrangement. The nozzle chamber 2 is substantially cylindrical. The diameter of the nozzle chamber 2 is smaller than the diameter of the prechamber 1. In the embodiment of the figures, the openings 6 are arranged symmetrically around the nozzle chamber 2. Each of the openings 6 forms part of a nozzle channel 22, through which the fluid from the nozzle chamber 2 is injected into the main combustion chamber 10. The nozzle channels 22 are inclined such that the fluid flow from the nozzle chamber 2 is directed towards the walls of the cylinder. A mixing element 7 is arranged between the prechamber 1 and the nozzle chamber 2. The mixing element 7 separates the prechamber 1 from the nozzle chamber 2 but allows fluid communication between the prechamber 1 and the nozzle chamber 2. The function of the mixing element 7 is to improve mixing between the fuel/residual gas mixture present in the prechamber 1 and the air/fuel mixture flowing into the prechamber 1 from the main combustion chamber 10. Naturally, some residual gas is present also in the air/fuel mixture of the main combustion chamber 10. The mixing element 7 comprises a plurality of openings 8. The openings 8 are arranged so that the mixing element 7 has a solid central region 9 and the openings 8 are located around the central region 9. The mixing element 7 and the openings 8 are configured such that the fluid that flows from the nozzle chamber 2 into the prechamber 1 is directed away from the central axis 13 of the prechamber arrangement. The flow is thus directed towards the side walls of the prechamber 1 and not towards the spark plug 4. In other words, the mixing element 7 prevents direct flow from the nozzle chamber 2 towards the spark plug 4. In the opposite direction, the flow from the prechamber 1 into the nozzle chamber 2 is directed towards the central axis 13 of the prechamber arrangement. A further advantage of the mixing element 7 is that the mixing element 7 functions as a protective shield against the hot combustion gases that are flowing into the prechamber 1 during the combustion in the main combustion chamber 10. Convective heat transfer to the spark plug 4 is thus decreased. The mixing element 7 distributes the hot flow evenly into the prechamber 1 and facilitates mixing of the gas with the residual gases remaining in the prechamber 1. The mixing element 7 is dome-shaped. The mixing element 7 has a concave side and a convex side and the concave side faces the nozzle chamber 2.

In the embodiment of the figures, the prechamber arrangement comprises a first part 11, which forms a major part of the prechamber 1, a second part 12, which forms a major part of the nozzle chamber 2, and a third part, which forms the mixing element 7. The mixing element 7 is thus a separate insert. Instead of being a separate part, the first part 11 could be an integral part of a cylinder head casting. By making the first, the second and the third part 11, 12, 7 separate parts, different materials may be used, which allows the most suitable material being chosen for each part.

The engine is a four-stroke Otto engine. During the intake stroke, major part of the fuel is introduced into the intake duct 14 via a gas admission valve 20. Each cylinder of the engine is provided with an own gas admission valve 20, which is arranged immediately before the intake valves 17, and the fuel injection into each cylinder can thus be controlled independently. The gas admission valve 20 is preferably electrically controlled. The fuel is a gaseous fuel, such as natural gas. The fuel is mixed with the intake air forming a lean mixture that contains more air than is needed for the complete combustion of the fuel. At the same time as the fuel is injected into the intake duct 14 via the gas admission valve 20, a smaller amount of fuel is injected into the prechamber 1 via the fuel inlet 5. The same fuel is injected both into the intake duct 14 and into the prechamber 1. The amount of the fuel that is injected into the prechamber 1 is controlled by a prechamber fuel valve. The prechamber fuel valve can be, for instance, a cam-controlled valve or an electrically controlled valve.

After the exhaust stroke, some burnt residual gas remains in the prechamber 1. Because of the prechamber design, a significant part of the residual gas is expelled from the prechamber 1 by the fuel injection. During the intake stroke and especially during the compression stroke, air/fuel mixture flows from the main combustion chamber 10 into the prechamber 1, where it mixes with the mixture formed by the fuel and the residual gases. Because of the separate fuel injection into the prechamber 1, the mixture in the prechamber 1 is significantly richer than the mixture in the main combustion chamber 10. When the piston is close to top dead center, the mixture in the prechamber 1 is ignited by the spark plug 4. The combustion thus starts in the prechamber 1 and the fluid flowing from the prechamber 1 into the main combustion chamber 10 ignites the main fuel charge in the cylinder. During the power stroke, hot combustion gases flow from the main combustion chamber 10 into the prechamber 1. The mixing element 7 protects the spark plug 4 from the hot gases. During the exhaust stroke the exhaust gases are scavenged from the cylinder via the exhaust duct 15, but some residual gases remain in the main combustion chamber 10 and the prechamber 1 even after the exhaust stroke.

It will be appreciated by a person skilled in the art that the invention is not limited to the embodiments described above, but may vary within the scope of the appended claims.

## Claims

1. A prechamber arrangement for a piston engine, the prechamber arrangement comprising
- a prechamber (1), which comprises an opening (3) for receiving a spark plug (4) and at least one fuel inlet (5) for introducing fuel into the prechamber (1),
- a nozzle chamber (2), which is in fluid communication with the prechamber (1) and comprises at least one opening (6) for receiving air/fuel mixture from a main combustion chamber (10) of the engine and for supplying ignited fluid mixture from the prechamber (1) into the main combustion chamber (10), and
- a dome-shaped mixing element (7) that is arranged between the prechamber (1) and the nozzle chamber (2),
**characterized in that** the concave side of the dome-shaped mixing element faces the nozzle chamber (2).

2. An arrangement according to claim 1, wherein the mixing element (7) comprises two or more openings (8) for establishing fluid communication between the prechamber (1) and the nozzle chamber (2).

3. An arrangement according to claim 2, wherein the openings (8) of the mixing element (7) are arranged around a solid central region (9).

4. An arrangement according to any of the preceding claims, wherein the mixing element (7) is configured to direct fluid that flows from the nozzle chamber (2) into the prechamber (1) away from the longitudinal central axis (13) of the prechamber arrangement.

5. An arrangement according to any of the preceding claims, wherein the mixing element (7) is a part that is separate from the parts forming the prechamber (1) and the nozzle chamber (2).

6. An arrangement according to any of the preceding claims, wherein the arrangement comprises a first part (11) forming at least a major part of the prechamber (1), a second part (12) forming at least a major part of the nozzle chamber (2) and a third part forming the mixing element (7).

7. An arrangement according to claim 6, wherein the first part (11) is an integral part of a cylinder head (21).

8. An arrangement according to any of the preceding claims, wherein the opening (3) for the spark plug (4) is arranged on opposite side of the prechamber (1) compared to the mixing element (7).

9. An arrangement according to any of the preceding claims, wherein the fuel inlet (5) and the mixing element (7) are configured such that direct flow from the fuel inlet (5) through the mixing element (7) is prevented.

10. An arrangement according to any of the preceding claims, wherein the prechamber (1) has a curved wall and the fuel inlet (5) is arranged to introduce the fuel into the prechamber (1) in a tangential direction in relation to the wall of the prechamber (1).

11. An arrangement according to any of the preceding claims, wherein the fuel inlet (5) is arranged in a side wall of the prechamber (1).

12. An arrangement according any of the preceding claims, wherein the prechamber (1) has a spheroid shape.

13. An arrangement according to any of the preceding claims, wherein the nozzle chamber (2) has an elongated shape.

14. A piston engine comprising a prechamber arrangement according to any of the preceding claims.

## Patentansprüche

1. Vorkammeranordnung für einen Kolbenmotor, wobei die Vorkammeranordnung Folgendes umfasst
- eine Vorkammer (1), welche eine Öffnung (3) zum Aufnehmen einer Zündkerze (4) und mindestens einen Kraftstoffeinlass (5) zum Einführen eines Kraftstoffs in die Vorkammer (1) umfasst,
- eine Düsenkammer (2), welche in Fluidverbindung mit der Vorkammer (1) steht und mindestens eine Öffnung (6) zum Aufnehmen eines Luft-/Kraftstoffgemisches aus einer Hauptverbrennungskammer (10) des Motors und zum Zuführen eines entzündeten Fluidgemisches aus der Vorkammer (1) in die Hauptverbrennungskammer (10) umfasst, und
- ein kuppelförmiges Mischelement (7), das zwischen der Vorkammer (1) und der Düsenkammer (2) angeordnet ist,
**dadurch gekennzeichnet, dass** die konkave Seite des kuppelförmigen Mischelements der Düsenkammer (2) gegenüberliegt.

2. Anordnung nach Anspruch 1, wobei das Mischelement (7) zwei oder mehrere Öffnungen (8) zum Herstellen einer Fluidverbindung zwischen der Vorkammer (1) und der Düsenkammer (2) umfasst.

3. Anordnung nach Anspruch 2, wobei die Öffnungen (8) des Mischelements (7) um einen festen zentralen Bereich (9) angeordnet sind.

4. Anordnung nach einem der vorhergehenden Ansprüche, wobei das Mischelement (7) ausgelegt ist, um Fluid, das aus der Düsenkammer (2) in die Vorkammer (1) strömt, von der zentralen Längsachse (13) der Vorkammeranordnung weg zu leiten.

5. Anordnung nach einem der vorhergehenden Ansprüche, wobei das Mischelement (7) ein Teil ist, das separat von den Teilen ist, die die Vorkammer (1) und die Düsenkammer (2) bilden.

6. Anordnung nach einem der vorhergehenden Ansprüche, wobei die Anordnung ein erstes Teil (11), das mindestens einen großen Teil der Vorkammer (1) bildet, ein zweites Teil (12), das mindestens einen großen Teil der Düsenkammer (2) bildet, und ein drittes Teil, das das Mischelement (7) bildet, umfasst.

7. Anordnung nach Anspruch 6, wobei das erste Teil (11) ein integrales Teil eines Zylinderkopfes (21) ist.

8. Anordnung nach einem der vorhergehenden Ansprüche, wobei die Öffnung (3) für die Zündkerze (4) im Vergleich zum Mischelement (7) auf einer entgegengesetzten Seite der Vorkammer (1) angeordnet ist.

9. Anordnung nach einem der vorhergehenden Ansprüche, wobei der Kraftstoffeinlass (5) und das Mischelement (7) derart ausgelegt sind, dass eine direkte Strömung aus dem Kraftstoffeinlass (5) durch das Mischelement (7) verhindert wird.

10. Anordnung nach einem der vorhergehenden Ansprüche, wobei die Vorkammer (1) eine gekrümmte Wand aufweist und der Kraftstoffeinlass (5) angeordnet ist, um den Kraftstoff in die Vorkammer (1) in einer tangentialen Richtung in Bezug zur Wand der Vorkammer (1) einzuführen.

11. Anordnung nach einem der vorhergehenden Ansprüche, wobei der Kraftstoffeinlass (5) in einer Seitenwand der Vorkammer (1) angeordnet ist.

12. Anordnung nach einem der vorhergehenden Ansprüche, wobei die Vorkammer (1) eine sphäroide Form aufweist.

13. Anordnung nach einem der vorhergehenden Ansprüche, wobei die Düsenkammer (2) eine längliche Form aufweist.

14. Kolbenmotor, umfassend eine Vorkammeranordnung nach einem der vorhergehenden Ansprüche.

## Revendications

1. Ensemble de préchambre pour un moteur à piston, l'ensemble de préchambre comprenant :
- une préchambre (1) comprenant une ouverture (3) destinée à recevoir une bougie d'allumage (4) et au moins une entrée de carburant (5) pour l'introduction de carburant dans la préchambre (1),
- une chambre d'injecteur (2) en communication fluidique avec la préchambre (1) et comprenant au moins une ouverture (6) destinée à recevoir un mélange air/carburant à partir d'une chambre de combustion principale (10) du moteur et à délivrer un mélange de fluide enflammé à partir de la préchambre (1) dans la chambre de combustion principale (10), et
- un élément de mélange en forme de dôme (7) disposé entre la préchambre (1) et la chambre d'injecteur (2),
**caractérisé en ce que** le côté concave de l'élément de mélange en forme de dôme est tourné vers la chambre d'injecteur (2).

2. Ensemble selon la revendication 1, dans lequel l'élément de mélange (7) comprend deux ou plusieurs ouvertures (8) destinées à établir une communication fluidique entre la préchambre (1) et la chambre d'injecteur (2).

3. Ensemble selon la revendication 2, dans lequel les ouvertures (8) de l'élément de mélange (7) sont disposées autour d'une région centrale solide (9).

4. Ensemble selon l'une quelconque des revendications précédentes, dans lequel l'élément de mélange (7) est configuré pour diriger du fluide s'écoulant à partir de la chambre d'injecteur (2) vers la préchambre (1) à distance de l'axe central longitudinal (13) de l'ensemble de préchambre.

5. Ensemble selon l'une quelconque des revendications précédentes, dans lequel l'élément de mélange (7) est une partie séparée des autres parties formant la préchambre (1) et la chambre d'injecteur (2).

6. Ensemble selon l'une quelconque des revendications précédentes, dans lequel l'ensemble comprend une première partie (11) formant au moins une partie majeure de la préchambre (1), une deuxième partie (12) formant au moins une partie majeure de la chambre d'injecteur (2), et une troisième partie formant l'élément de mélange (7).

7. Ensemble selon la revendication 6, dans lequel la première partie (11) fait partie intégrante d'une tête de cylindre (21).

8. Ensemble selon l'une quelconque des revendications précédentes, dans lequel l'ouverture (3) pour la bougie d'allumage (4) est disposée sur un côté opposé de la préchambre (1) par rapport à l'élément de mélange (7).

9. Ensemble selon l'une quelconque des revendications précédentes, dans lequel l'entrée de carburant (5) et l'élément de mélange (7) sont configurés de manière à empêcher un écoulement direct à travers l'élément de mélange (7) à partir de l'entrée de carburant (5).

10. Ensemble selon l'une quelconque des revendications précédentes, dans lequel la préchambre (1) comporte une paroi courbe et l'entrée de carburant (5) est conçue pour introduire le carburant dans la préchambre (1) dans une direction tangentielle par rapport à la paroi de la préchambre (1).

11. Ensemble selon l'une quelconque des revendications précédentes, dans lequel l'entrée de carburant (5) est disposée dans une paroi latérale de la préchambre (1).

12. Ensemble selon l'une quelconque des revendications précédentes, dans lequel la préchambre (1) présente une forme sphérique.

13. Ensemble selon l'une quelconque des revendications précédentes, dans lequel la chambre d'injecteur (2) présente une forme allongée.

14. Moteur à piston comprenant un ensemble de préchambre selon l'une quelconque des revendications précédentes.
